(19)

Europäisches
Patentamt
European
Patent Office
Office européen
des brevets

(11)  **EP 4 086 827 A1**

(12)  # EUROPEAN PATENT APPLICATION
published in accordance with Art. 153(4) EPC

(43) Date of publication:
**09.11.2022  Bulletin 2022/45**

(21) Application number: **21921683.5**

(22) Date of filing: **28.04.2021**

(51) International Patent Classification (IPC):
*G06Q 10/06* *(2012.01)*

(86) International application number:
**PCT/CN2021/090731**

(87) International publication number:
**WO 2022/188251 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2021  CN 202110251641**

(71) Applicant: **Southeast University**
**Nanjing City, Jiangsu 210096 (CN)**

(72) Inventor: **YANG, Fan**
**Nanjing, Jiangsu 210096 (CN)**

(74) Representative: **Petraz, Gilberto Luigi et al**
**GLP S.r.l.**
**Viale Europa Unita, 171**
**33100 Udine (IT)**

(54)  **METHOD FOR RESEARCHING RESOURCE ENDOWMENT AND ECONOMIC GROWTH**

(57)  The present invention belongs to the field of environmental economy, and discloses a method for studying resource endowments and economic growth. The method includes the following steps: construction of a structural benchmark model, structural effect sorting, environmental effect sorting, overall growth effect and conclusion analysis. According to the present invention, through construction of a multi-path structural benchmark equation model, structural effects, environmental effects and growth effects of resource endowments affecting economic development are horizontally sorted; direct, indirect and overall actions in the different effects are longitudinally deconstructed; the multi-channel influence of natural resource endowments on economic growth is systematically analyzed; and a complex influence path of natural resources on economic growth is analyzed, and it is of great significance to transforming the economic structure, guaranteeing energy safety and constructing a resource-conserving society.

FIG. 1

EP 4 086 827 A1

**Description**

**TECHNICAL FIELD**

The present disclosure belongs to the field of environmental economy, and particularly relates to a method for studying resource endowments and economic growth.

BACKGROUND

As an industry connecting natural resources and economic systems, the mining industry, on the one hand, inputs essential energy and resource foundations for economic activities, and on the other hand, also outputs various contaminants and waste. As a region rich in natural endowments, resource-based cities generally show a state of sluggish growth under the tide of industrial structural transformation, and some cities even have "zero growth" or "negative growth" for years. With the saturation of ecological carrying capacity and the enhancement of people's environmental awareness, the development of the mining industry and resource-based cities is in a dilemma. Repeated waves of globalization, abnormal fluctuations in energy prices and poor commodity circulation add difficulties and uncertainties to transformation and development paths of the resource industry. Clarifying the multifaceted role of resource endowments in the social and economic system and analyzing complex influence paths of natural resources on economic growth are of great significance to transforming the economic structure, guaranteeing energy safety and constructing a resource-conserving society.

**SUMMARY**

Aiming at the deficiency of the prior art, an objective of the present disclosure is to provide a method for studying resource endowments and economic growth.
The objective of the present disclosure can be achieved through the following technical solutions:

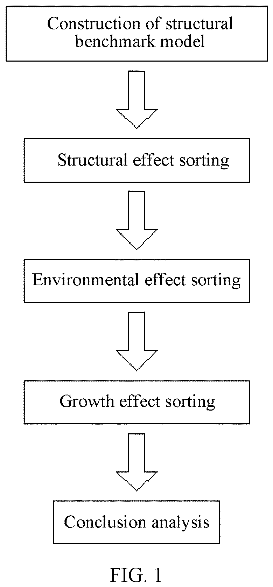

In a method for studying resource endowments and economic growth, urban resource and economic data are collected, and a structural benchmark model $Y_i$ is constructed from independent variables and dependent variables in the collected data;
a positive correlation relationship between standard deviation units of urban modern resource practitioners and standard deviation units of urban historical resource reserves is obtained through the structural benchmark model $Y_i$, and obtained results are analyzed and sorted to obtain a structural effect sorting result;
an increase relationship between standard deviation units of urban resource contaminants and the standard deviation units of the urban modern resource practitioners is obtained through the structural benchmark model $Y_i$, and obtained results are analyzed and sorted to obtain an environmental effect sorting result;
structural effects and environmental effects are integrated, all influence paths of the resource endowments on economic growth are embodied, and obtained results are analyzed and sorted to obtain an overall growth effect result; and
a relationship between the resource endowments and the economic growth is obtained by performing comparative analysis on the structural effect sorting result, the environmental effect sorting result and an integrated growth effect result, as shown in FIG. 1.

In some disclosures, the structural benchmark model $Y_i$ is constructed from the independent variables and the dependent variables in the collected data by adopting a least square method, $Y_i = \alpha + \beta N_i + \varepsilon_i$, in the formula, $Y_i$ denotes economic development level, and $N_i$ denotes natural resource abundance.
In some disclosures, the natural resource abundance $N_i$ is selected from resource reserve data ascertained in *Summary of China Mining Industry (Fourth)*.
In some disclosures, comparative analysis is performed on the structural effect sorting result, the environmental effect sorting result and the integrated growth effect result through a structural equation measuring model.
Beneficial effects of the present disclosure are as follows:
According to the present disclosure, influence paths and multiple effects of natural resources on economic factors are systematically analyzed and deconstructed and complex influence paths of natural resources on economic growth are analyzed from the perspectives of direct influences, indirect influences and overall influences by using the multi-dimensional analysis paradigm of a structural equation, which is of great significance to transforming the economic structure, guaranteeing energy safety and constructing a resource-conserving society.

**BRIEF DESCRIPTION OF THE DRAWINGS**

To describe the technical solutions in embodiments of the present disclosure or in the prior art more clearly, the following briefly describes accompanying drawings required for describing the embodiments or the prior art. Apparently, a person of ordinary skill in the art may still derive other drawings from these accompanying drawings without creative efforts.

FIG. 1 is a schematic flow diagram of an embodiment of the present disclosure; and
FIG. 2 is a schematic diagram of an influence mechanism of natural resources on economic development according to an embodiment of the present disclosure.

**DETAILED DESCRIPTION**

The following clearly and completely describes the technical solutions in the embodiments of the present disclosure with reference to the accompanying drawings in the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

In the present disclosure, characteristic facts of the correlation between natural resources and economic growth are studied at first, and data processing is performed on 4437 sample points in 261 prefecture-level cities from 2001 to 2017 by utilizing STATA15.0.

In order to investigate the association between independent variables and dependent variables, in the present disclosure, a benchmark model is constructed at first by adopting a least square method (OLS):

$$Y_i = \alpha + \beta N_i + \varepsilon_i \qquad\qquad (1)$$

$Y_i$ denotes economic development level, and $N_i$ denotes natural resource abundance.

According to some existing literatures and disclosures, Ding Congming et al. (2018) used dummy variables to describe "whether is a resource-based city", and this method simply described the continuous variable of resource abundance as a discrete variable. Yu Xiangyu et al. (2019) used the consumption of coal, petroleum and natural gas to describe energy endowments, while Bildirici et al. (2019) used precious metal production data to measure precious metal resource endowments of the United States. The above methods have greatly enriched our way of measuring natural resource endowments, but there are also some shortcomings. On the one hand, natural resources are measured from the two perspectives of resource stocks and exploitation flows, and when analyzing the proposition of "resource curse", stock analysis is more appropriate. As a proposition in the long-term development process (Santos & Rafael, 2018; Li Hong and Zou Qing, 2018), resource-restricted poverty is not easy to affect by current or phased resource exploitation flows. The rational expectation for stable incomes of the mining industry brought by the abundant mineral stocks, as well as the subsequent long evolution of the industrial pattern and the formation of path dependence are the key reasons for the occurrence of curses or blessing (Jacquet et al., 2018). Therefore, in the existing literatures, the resource endowments are measured with flow data, which will lead to the measurement error problem. On the other hand, the year-by-year mining of mines will inevitably bring about continuous changes in the stock (You Guangyong et al., 2016), while the strong mining demand in developed regions will bring about endogenous problems, that is, resources will affect economic development, and economic development, in turn, will promote resource mining (Liu Jianfen et al., 2017). Therefore, measuring the resource endowments with data in the observation period in the existing literatures will lead to the endogenous problems due to two-way causality.

In the present disclosure, for the selection of the natural resource abundance, resource reserve data ascertained in *Summary of China Mining Industry (Fourth)* is used for measuring natural resource endowments of cities. The *Summary of China Mining Industry (Fourth)* recorded resource reserves of various coal mines from 1929 to 1931, and since then, the resources have supported the start of industrialization and the whole stage of gradual construction of the industrial chain. Therefore, the resource reserves recorded in the *Summary of China Mining Industry (Fourth)* are used for measuring the modern natural resource abundance, not only because the resources of these two periods are highly correlated, but also because the early data can represent the informal system, conventions and traditions brought about by natural resources. In addition, the long historical sight distance eliminates the reverse causality that the economy affects the resource reserves, and solves the endogenous problems that may be caused by current reserve data.

It is worth noting that in terms of the selection of the type of natural resources, the natural resources include coal, petroleum, non-ferrous metals, etc., and in the present disclosure, coal with the growth effect being the most obvious is selected as an alternative variable of the natural resources. Coal can better represent natural resources for the following reasons: first, China is a large coal producer, so the records of coal mine data are the most abundant and detailed; second, as the basic energy, coal accounts for about 70% of primary energy; and third, the energy structure strategy of "coal based and diversified development" established during the "Eleventh Five-Year Plan" period continues to this day.

According to the present disclosure, the locations of coal mines are positioned through the *Summary of China Mining Industry (Fourth),* longitude and latitude data of each coal mine is collected, the urban center is represented by the location of the municipal government, the distance between each coal mine and the adjacent urban center is measured, and reserves of coal mines 300, 200, 100 and 50 kilometers away from the urban center are calculated. Consistent with the existing literatures, the economic development level is measured by two groups of data of the mean value of gross regional domestic products and the logarithm of the mean value of regional gross domestic products of each city from 2001 to 2017, which are from the *China City Statistical Yearbook* of the corresponding year.

Table 1 reports benchmark regression results calculated through the least square method. In the above benchmark regression, a linear relationship between coal reserves and economic growth is not significant, which is also one of the reasons why the research on China's resource curses has not been finalized for a long time.

Table 1 Benchmark Regression

|  | GDP | InGDP |
|---|---|---|
| Coal reserves within 300 kilometers | 126156.0 (177315.5) | 0.0204376 (0.0124531) |
| Coal reserves within 200 kilometers | -41455.48 (199836.8) | 0.0116947 (0.0126160) |
| Coal reserves within 100 kilometers | -30034.4 (275293.7) | 0.0080063 (0.0154329) |
| Coal reserves within 50 kilometers | -178313.5 (344523.4) | -0.0099357 (0.0186210) |
| Note: ***, ** and * denote significance at levels of 1%, 5% and 10% respectively. In parentheses is a robust standard error of a coefficient. | | |

A structural equation model is used in the present disclosure to describe influence paths of regional natural resource endowments on different dimensions of regional economic growth. As a typical system analysis method, the structural equation model achieves the purpose of describing multi-dimensional correlation simultaneously by integrating and combining a series of linear equations. The logical system of a structural equation can measure the correlation between observable variables and latent variables, and can also quantify the correlation between the latent variables. The former is summarized as a measuring model, and the latter is called a structural model.

A typical structural equation measuring model consists of a measuring model and a structural model:

$$y = \Lambda_y \eta + \varepsilon \qquad (2)$$

$$x = \Lambda_x \xi + \delta \qquad (3)$$

$$\eta = B\eta + \Gamma\xi + \zeta \qquad (4)$$

As shown above, formula (2) and formula (3) are measuring models. Formula (2) describes endogenous variable, and formula (3) describes exogenous variable. $y$ is an endogenous variable containing a p-dimensional column vector, and $x$ is an exogenous variable containing a q-dimensional column vector. $\Lambda_y$ and $\Lambda_x$ are a p × m coefficient matrix and a q × n coefficient matrix respectively, and the p-dimensional column vector $\varepsilon$ and the q-dimensional column vector $\delta$ represent residuals respectively. Formula (4) is a structural model, which describes a relationship between exogenous latent variables and endogenous latent variables, and by fixing a variance as 1, the structural model standardizes the latent variables (Jöreskog; Sörbom. 1996). $\eta$ represents an endogenous latent variable containing an m-dimensional column vector, and $\xi$ represents an exogenous latent variable containing an n-dimensional column vector. B is an m × m coefficient matrix describing the relationship between the endogenous latent variables, an m × n coefficient matrix $\Gamma$

describes the influence of the exogenous latent variables on the endogenous latent variables, and the m-dimensional column vector $\zeta$ is a residual term.

The advantage of adopting the structural equation in the present disclosure is that traditional single linear equations are replaced with simultaneous equations, which can overcome the errors caused by missing influence mechanisms, missing key variables and multicollinearity problems, and a complex influence system among variables is better described; and it is avoided that under the background of rapid industrial upgrading and tighter environmental constraints, the effects of different transmission mechanisms between resources and economy are completely different, and ignoring specific influence paths will affect the accuracy of conclusions because of regression problems, such as compressing a multi-dimensional influence path between resources and growth to a two-dimensional linear equation (Alshehry & Belloumi, 2015; Corrigan, 2014; Sala-i-Martin & Subramanian, 2013; Aleksynska & Havrylchyk, 2013).

In the present disclosure, the role of resource endowments on the regional economic development level is studied, which involves a plurality of influence paths that are associated with each other and locally overlapped. On the one hand, coal mines, petroleum and other resources, existed as natural factors, are associated with the economic society via the mining industry. On the other hand, the influence of the mining industry on the society includes not only an environmental path with resource consumption and pollution emissions as intermediate variables, but also a structural path with industrial structure adjustment as intermediate variables. Only by comprehensively deconstructing the above multi-dimensional path can the complex relationship between natural resource endowments and economic development be accurately summarized, and the logical framework and theoretical background of different views such as "resource blessing" and "resource curse" be clarified.

Model construction:

The existing literatures show the multi-dimensional association between resources and economy, and the above structural equation logic framework is adopted in the present disclosure to quantify these channels. In general, an influence mechanism of natural resources on economic development is as follows:

Hypothesis 1: rich mineral resources are a key factor to promote the development of the mining industry.
Hypothesis 2: the development of the mining industry will drive the development of the secondary industry via synergy.
Hypothesis 3: the development of the mining industry will restrain the development of the tertiary industry through a crowding-out effect.
Hypothesis 4: the development of the secondary industry and the tertiary industry jointly affects economic growth.
Hypothesis 5: regions with developed mining industry will be accompanied by environmental pollution.
Hypothesis 6: environmental pollution has constraints on current economic growth.

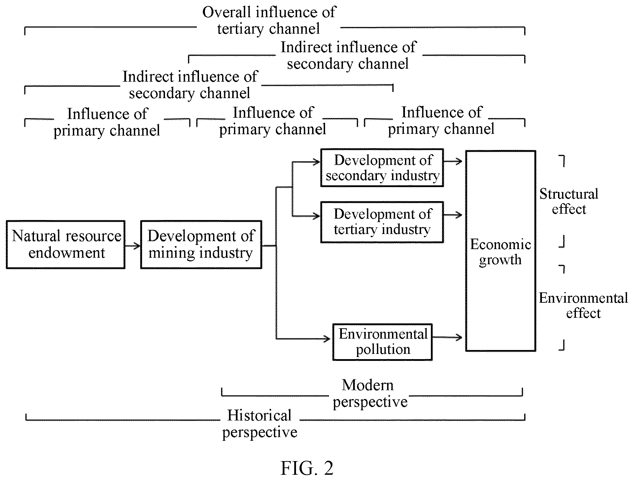

Hypothesis 1 to Hypothesis 4 illustrate an action path of natural resources ultimately affecting economic development via the industrial structure, hereinafter referred to as structural effect. Hypothesis 1, Hypothesis 5 and Hypothesis 6 describe an action mechanism of natural resources affecting the economy through environmental variables, hereinafter referred to as environmental effect. Hypothesis 1 to Hypothesis 6 construct an overall framework of natural resources acting on economic growth, hereinafter referred to as growth effect. The above hypotheses construct a one-way noncyclic structural system with resource endowment as the starting point and economic growth as the end point, and its scientificity will be verified in an empirical part, and the influence mechanism may be summarized as FIG. 2.

Index selection:

Data of 261 prefecture-level cities or cities above the prefecture level in China are mainly used in the present disclosure. The original data for measuring the natural resource endowments come from the special geological report C species No. 4 (from the 18th to the 20th year of the Republic of China) in the *Summary of China Mining Industry (Fourth).* Other data representing the concepts of industrial development, environmental pollution, economic growth and the like are from the *China Province and Cities Economic Development Yearbook,* the *China Statistical Yearbook for Regional Economy* and the *China City Statistical Yearbook.* In order to realize the connection of historical data with modern data in the structural equation, balance panel data from 2001 to 2017 is processed as annual means in the present disclosure. Table 2 illustrates operational definitions and statistical descriptions of variables.

Table 2 Operational Definitions and Statistical Descriptions of Variables

| Variable name | Abbreviation | Operational definition | Unit | Observed value | Mean | Standard deviation | Minimum value | Maximum value |
|---|---|---|---|---|---|---|---|---|
| Economic development level | gdp | Gross regional domestic product | Ten-thousand RMB | 4437 | 1.20E + 07 | 1.90E+07 | 179307 | 2.40E+08 |
| Natural resource abundance | mine300 | Logarithm of coal mine reserve within three hundred kilometers of city | Million tonnes | 4437 | 6.8733 | 3.898823 | 0 | 11.8942 |
| Mining industry development level | mining | Mining industry practitioner | Ten-thousand people | 4437 | 2 | 3.1721 | 0 | 24.39 |
| Secondary industry development level | se_gdp | Proportions of secondary industry to GDP | % | 4437 | 48.67231 | 11.21507 | 16 | 91 |
| Tertiary industry development level | te_gdp | Proportions of tertiary industry to GDP | % | 4437 | 36.06912 | 8.362012 | 9 | 77.95 |
| Population gross | popu | Year-end population of city | Ten-thousand people | 4437 | 440.084 | 305.6259 | 16 | 3375.2 |
| Employment situation | em | Regional practitioner | Ten-thousand people | 4437 | 47.58748 | 68.82828 | 4 | 954 |
| Area of city | area_u | Area of built-up region | Square kilometers | 4437 | 104.3742 | 143.2324 | 0 | 1825 |
| Industry development level | indus | Gross industrial output value above designated size | RMB | 4437 | 1.78E + 07 | 3.20E+07 | 36179 | 3.20E+08 |
| Pollution emission | so2_dis | Emission of industrial sulfur dioxide | Ton | 4437 | 63494.92 | 61022.67 | 2 | 683162 |

Setting of model equation:

According to the research hypotheses of the present disclosure and the influence mechanism described in FIG. 2, based on the availability of the prefecture-level statistical data, we abstracted a series of equations based on Hypotheses 1-6 to form a structural equation measuring model. Equation (1) to Equation (4) describe the structural effect; and Equation (1), Equation (5) and Equation (6) describe the environmental effect. Equation (1) to Equation (6) correspond to the growth effect.

$$\text{mining} = \alpha_0 + \alpha_1 \text{mine300} + e_1 \tag{5}$$

$$\text{se\_gdp} = \alpha_2 + \alpha_3 \text{mining} + e_2 \tag{6}$$

$$\text{te\_gdp} = \alpha_4 + \alpha_5 \text{mining} + e_3 \tag{7}$$

$$\text{gdp} = \alpha_6 + \alpha_7 \text{se\_gdp} + \alpha_8 \text{te\_gdp} + e_4 \tag{8}$$

$$so_2\_\text{dis} = \alpha_9 \text{mining} + e_5 \tag{9}$$

$$\text{gdp} = \alpha_{10} + \alpha_{11} \text{popu} + \alpha_{12} \text{em} + \alpha_{13} \text{area\_u} + \alpha_{14} \text{indus} + \alpha_{15} so_2\_\text{dis} + e_6 \tag{10}$$

Data processing

The influence of the natural resource endowments on the economic growth is as shown in FIG. 2, and this multi-channel and multi-angle action is summarized into three influence mechanisms of different spans. A direct influence that does not involve intermediate variables is called a primary channel, and a structural equation estimator of the primary channel and a standardized value obtained after z-score processing will be reported in the present disclosure. In addition, according to the different logical chain spans, an indirect influence that involves one intermediate variable is summarized as a secondary channel, while an overall influence of the resource endowments on the economic growth successively involves two intermediate variables, and is summarized as a tertiary channel. The present disclosure deconstructs the association among the direct influence, the indirect influence and the overall influence through matrix operations.

In order to realize horizontal comparison among the plurality of channels and avoid the impact of different data units, the present disclosure not only reports the direct influence of the primary channel in the structural equation, but also compares the standardized value of the direct influence of the primary channel. A z-score method is adopted in the present disclosure to calculate a standardized coefficient, and its economic significance can be interpreted as an influence degree measured by the standard deviation unit (Lomax et al., 2004). Formula (11) is a standardized formula, $X_i$ is direct regression coefficient and $X'_i$ is the standardized coefficient.

$$X'_i = \frac{X_i - \frac{1}{n}\sum_{i=1}^{n} X_i}{\sqrt{\frac{1}{n}\sum_{i=1}^{n}(X_i - \frac{1}{n}\sum_{i=1}^{n} X_i)^2}} \tag{11}$$

Several transmission paths of the resource endowments affecting the economic growth are a link between the past and the future. Therefore, in addition to the direct influence of the primary channel that has not reached a consensus in the literature, the indirect influence of the secondary channel of the mining industry on growth via the environment and industry and the overall influence of resources on economy that integrates all structural equation paths both have the theoretical value and practical significance for study.

Based on this, the present disclosure will firstly show the direct effect of linear structural equations, and then deconstruct the matrix operations of the indirect effect.

$$\eta = B\eta + \Gamma\xi + \zeta \tag{12}$$

The above structural equation shows the direct effect, an endogenous variable $\eta$ is an m-dimensional column vector, an exogenous variable $\xi$ is an n-dimensional column vector, and random error terms are not correlated, i.e., a covariance operator of $\zeta$ is 0. Matrix B represents the direct influence of endogenous variables on endogenous variables, Matrix $\Gamma$ represents the direct influence of exogenous variables on endogenous variables, and the recursion of the model makes B a strict triangular matrix.

Based on the direct influence described in formula (12), an operation mode of the indirect influence and the overall influence may be deduced. In a total path with a length of r = n (n $\in$ N+), the path with r = 1 represents the direct effect, and r > 1 represents the indirect effect. The indirect effect is the sum of related direct effects $\left(\text{Indirect}=\sum_{i=2}^{n} r_i\right)$, a total effect is the sum of the direct effects and the indirect effects $\left(\text{Total}=\sum_{i=1}^{n} r_i\right)$. A matrix representation is as follows:

$$T_{\eta\eta}= \begin{bmatrix} t_{\eta1\eta1} & \cdots & t_{\eta1\eta m} \\ \vdots & \ddots & \vdots \\ t_{\eta m\eta1} & \cdots & t_{\eta m\eta m} \end{bmatrix} \tag{13}$$

$$P_{\eta\eta}= \begin{bmatrix} p_{\eta1\eta1} & \cdots & p_{\eta1\eta m} \\ \vdots & \ddots & \vdots \\ p_{\eta m\eta1} & \cdots & p_{\eta m\eta m} \end{bmatrix} \tag{14}$$

$$T_{\eta\xi}= \begin{bmatrix} t_{\eta1\xi1} & \cdots & t_{\eta1\xi n} \\ \vdots & \ddots & \vdots \\ t_{\eta m\xi1} & \cdots & t_{\eta m\xi n} \end{bmatrix} \tag{15}$$

$$P_{\eta\xi}= \begin{bmatrix} p_{\eta1\xi1} & \cdots & p_{\eta1\xi n} \\ \vdots & \ddots & \vdots \\ p_{\eta m\xi1} & \cdots & p_{\eta m\xi n} \end{bmatrix} \tag{16}$$

$t_{\eta i\eta j}$ represents an overall effect between an ith exogenous variable and a jth exogenous variable, and $p_{\eta i\eta j}$ represents an indirect effect between corresponding exogenous variables; and $t_{\eta i\xi j}$ represents an overall effect of the influence of the jth exogenous variable on an ith endogenous variable, and $p_{\eta i\xi j}$ represents an indirect effect of the corresponding exogenous variable on the endogenous variable. It can be known from formula (12) that the overall effect is:

$$T_{\eta\eta} = B + P_{\eta\eta} \tag{17}$$

$$T_{\eta\xi} = \Gamma + P_{\eta\xi} \tag{18}$$

Further, the indirect effect may be calculated from formulas (17) and (18):

$$P_{\eta\eta} = T_{\eta\eta} - B \tag{19}$$

$$P_{\eta\xi} = T_{\eta\xi} - \Gamma \tag{20}$$

Verification and analysis

(I) Parameter analysis

It can be known from the above benchmark regression results that the linear relationship between gross regional domestic products and economic growth is not significant, and next, the present disclosure will conduct in-depth analysis of this problem in the form of structural equation. Table 3 to Table 5 describe the structural effect, environmental effect and growth effect of natural resources respectively. Most standardized coefficients can pass a t-test with a significance level of 1%, and a whole system presents better goodness of fit. The mean value of the gross regional domestic products and the logarithm of the mean value of the gross regional domestic products are used for measuring the economic development level, and the logarithm of coal reserves within 300, 200, 100 and 50 kilometers around a city is used for measuring the natural resource abundance, so that an estimation coefficient and significance are both robust. Therefore, we only report estimated results of core variables measured by the mean value of the gross regional domestic products and the logarithm of the coal reserves within 300 kilometers around the city.

Structural effect

Regression results in Table 3 correspond to the structural effect, which verifies the validity of Hypotheses1-4. The first column of Table 3 reports standardized path coefficients. Firstly, every time the historical coal reserves of a city increase by 1 standard deviation unit, the number of modern mining practitioners increases by 0.327 standard deviation unit, which indicates that regions with abundant mineral resources are more suitable for the development of the mining industry. Secondly, the mining industry drives the secondary industry with a standardized path coefficient of 0.337, and restrains the tertiary industry with a standardized path coefficient of -0.197, thereby affecting the entire industrial structure. On the one hand, as the cornerstone of the secondary industry, the mining industry provides indispensable raw materials and energy for the manufacturing, energy supply and construction industries, although its practitioners account for only 7% of the secondary industry. Micro enterprise site selection will be close to the origin of raw materials from the perspective of saving transportation costs, and the macro level is reflected in the attraction and aggregation of the mining industry to the manufacturing industry. Therefore, both the development of the mining industry itself and the radiation of the mining industry to the rest of the secondary industry are reflected in the positive impact of the mining industry on the secondary industry. On the other hand, just because the surroundings of the mining industry are suitable for the expansion of the secondary industry, it has a crowding-out effect on the tertiary industry from the perspectives of space, capital and labor. Therefore, mineral resource endowments have diametrically opposite influences on the secondary industry and the tertiary industry, which constitutes the distinctive feature of "one industry dominating" in resource-based cities.

Finally, the proportions of the secondary industry and the tertiary industry can both promote economic growth, and measured by the standardized path coefficient, the influence degrees are 0.366 and 0.605 respectively. So far, empirical data clearly describes the two paths of the structural effect, which are the role of natural resources on economic growth, but the influence directions are opposite. Through horizontal comparison by means of the economic significance of the standardized coefficients, we find that the mining industry has a higher influence degree on the secondary industry than the tertiary industry, but the influence degree of the secondary industry on economic growth is less than that of the tertiary industry. The two influences are indistinguishable from each other in terms of the standardized path coefficient, and therefore, it is necessary to superimpose the direct and indirect effects for overall analysis.

For the ease of comparison, the second column to the fourth column of Table 3 report non-standardized coefficients of the structural effect of natural resources, the second column is direct influence coefficients, the third column is indirect influence coefficients, and the fourth column is overall influence coefficients with the direct and indirect effects superimposed. By integrating the structural effects reported in Table 3 and calculating overall results after the combination of positive and negative effects, we find that the influences of the historical coal reserves and the modern mining industry on economic growth have the situation of significance disappearance. Based on the results of the direct effects and the indirect effects, it can be seen that the reason for the insignificance is not the lack of influence paths, but a phenomenon after positive and negative transmission mechanisms with similar influence degrees offset each other.

Table 3 Structural Effect

| Relation | standardized Coef. | Direct effect | Indirect effect | Total effect |
|---|---|---|---|---|
| mine300→minin g | 0.327*** | 0.255*** | - | 0.255*** |
| mine300→se_gd P | - | - | 0.282*** | 0.282*** |
| mine300→te_gdp | - | - | -0.126*** | -0.126*** |

(continued)

| Relation | standardized Coef. | Direct effect | Indirect effect | Total effect |
|---|---|---|---|---|
| mine300→gdp | - | - | 5662.483 | 5662.483 |
| mining→se_gdp | 0.337*** | 1.107*** | - | 1.107*** |
| mining→te_gdp | -0.197*** | -0.496*** | - | -0.496*** |
| mining→gdp | - | - | 22246.730 | 22246.730 |
| se gdp→gdp | 0.366*** | 624465.400*** | - | 624465.400*** |
| te gdp→gdp | 0.605*** | 1349642.000*** | - | 1349642.000*** |
| Note: ***, ** and * denote significance at levels of 1%, 5% and 10% respectively. | | | | |

Environmental effect

Regression results in Table 4 correspond to the environmental effect, which verifies the validity of Hypothesis 5 and Hypothesis 6. The first column of Table 4 reports standardized path coefficients. Firstly, consistent with the findings in Table 3, the historical coal reserves of a city have a positive influence on the modern mining practitioners. Secondly, every time the mining practitioners increase by 1 standard deviation unit, the sulfur dioxide emission will increase by 0.384 standard deviation unit, that is, a resource mining region is indeed accompanied by more serious pollution. This shows that a mine mining process is still a process of accumulation of ecological arrears, which is still far from the concept of green mines and the goal of reclamation and utilization. Waste, dust and harmful gas produced in the mining process make the surroundings of mines unsuitable for human settlement. Finally, sulfur dioxide emission does have a restrictive effect on economic growth, and its standardized path coefficient is -0.032. On the one hand, nowadays, industrial pollution is serious, and the purification ability of the natural environment to various kinds of pollution is decreasing day by day; and on the other hand, with the improvement of people's living standards, in most regions, earning basic living needs is no longer the primary goal, and the importance of taste and quality of life begins to highlight. Therefore, the mining industry inevitably produces pollution, which is not conducive to the economic development of local and surrounding markets. Different from the accompanying state of "high pollution and high growth" shown by many researches (Xi Penghui et al., 2017; Xia Yong et al., 2017), the present disclosure proves a tight constraint effect of environmental pollution on economic growth by using the multi-dimensional analysis paradigm of the structural equation. At present, such constraint has been presented in the current period and local regions through empirical data, rather than only affecting "our common future" remotely (WCED, 1987).

The second column to the fourth column of Table 4 report non-standardized coefficients of the environmental effect, and the second column, the third column and the fourth column are the direct, indirect and overall influence coefficients respectively. It can be seen from the overall influence coefficient that, taking environmental pollution as an intermediate variable, the historical mineral resource reserves and the current mining industry development both have a clear restraining effect on economic growth. Different from the structural effect, in the environmental effect, the resource endowments have a one-way restraining effect on the economic growth. Therefore, the negative effects in the "two sides" of resource exploitation will gradually become prominent with the increase of environmental requirements due to the saturation of ecological carrying capacity.

Table 4 Environmental Effect

| Relation | standardized Coef. | Direct effect | Indirect effect | Total effect |
|---|---|---|---|---|
| mine300→mining | 0.327*** | 0.255*** | - | 0.255*** |
| mine300→so2 dis | - | - | 1844.275*** | 1844.275*** |
| mine300→gdp | - | - | 15695.380*** | -15695.380*** |
| mining→so2 dis | 0.384*** | 7245.777*** | - | 7245.777*** |
| mining→gdp | - | - | 61663.920*** | -61663.920*** |
| so2 dis→gdp | -0.032*** | -8.510*** | - | -8.510*** |

(continued)

| Relation | standardized Coef. | Direct effect | Indirect effect | Total effect |
|---|---|---|---|---|
| popu→gdp | 0.059*** | 2955.473*** | - | 2955.473*** |
| em→gdp | 0.213*** | 52400.710*** | - | 52400.710*** |
| area u→gdp | 0.250*** | 28966.200*** | - | 28066.200*** |
| indus→gdp | 0.563*** | 0.384*** | - | 0.384*** |
| Note: ***, ** and * denote significance at levels of 1%, 5% and 10% respectively. | | | | |

Growth effect

The growth effect in Table 5 integrates the structural effect and the environmental effect, and embodies all influence paths of resource endowments on economic growth. The first column of Table 5 reports standardized path coefficients, and the second column, the third column and the fourth column are non-standardized coefficients of the direct, indirect and overall influences respectively. Based on the results in Table 3 and Table 4, abundant natural resources bring convenience to the mining industry. As a source of wealth, the mining industry significantly restrains the tertiary industry while effectively driving the secondary industry, and the significance of the influence on the overall economy disappears after offsetting the merits and demerits; and as a source of pollution, the mining industry directly restricts the development of economy. The industrial structural effect to measure wealth and the environmental effect to measure pollution are integrated in Table 5, with the negative effect of resource endowments on economic growth under positive and negative offsetting.

Table 5 Growth Effect

| Relation | standardized Coef. | Direct effect | Indirect effect | Total effect |
|---|---|---|---|---|
| mine300→mining | 0.327*** | 0.255*** | - | 0.255*** |
| mine300→so2 dis | - | - | 1844.274*** | 1844.275*** |
| mine300→se gdp | - | - | 0.282*** | 0.282*** |
| mine300→te gdp | - | - | -0.126*** | -0.126*** |
| mine300→gdp | - | - | -19152.440*** | -19152.440*** |
| mining→so2 dis | 0.384*** | 7245.777*** | - | 7245.777*** |
| mining→se gdp | 0.337*** | 1.107*** | - | 1.107*** |
| mining→te_gdp | -0.197*** | -0.496*** | - | -0.496*** |
| mining→gdp | - | - | -75246.040*** | 75246.040*** |
| so2 dis→gdp | -0.032*** | -8.269*** | - | -8.269*** |
| se gdp→gdp | 0.004 | 6447.117 | - | 6447.117 |
| te gdp→gdp | 0.023 | 45319.180 | - | 45319.180 |
| popu→gdp | 0.062*** | 3128.418*** | - | 3128.418*** |
| em→gdp | 0.217*** | 52685.470*** | - | 52685.470*** |
| area u→gdp | 0.235*** | 26891.850*** | - | 26891.850*** |
| indus→gdp | 0.572*** | 0.350*** | - | 0.350*** |
| Note: ***, ** and * denote significance at levels of 1%, 5% and 10% respectively. | | | | |

Through the deconstruction and reconstruction of a plurality of channels, we have made clear the role of natural resources in economic development, and clarify the "paradox" that the development of the mining industry leads to slow economic growth. On the one hand, when evaluating the role of natural resources within the national economic accounting system, it often comes to the conclusion that the influence is not significant, but this "neutral" conclusion is just the superposition of "curse" and "blessing". So far, we can explain the common "resource neutrality theory" and "mixed conclusion" (Daniel, 2008; Davis, 1995) in resource economics. Under the framework of the growth effect, focusing on different influence paths will lead to very different research results. The present disclosure adopts a systematic and global perspective to decompose and combine different influence paths in resource economics, and comes to the conclusion that the positive and negative effects of natural resources coexist, but the negative effects are more obvious.

(II) Test of goodness of fit

The statistics in Table 6 measure the goodness of fit of the structural effect, the environmental effect and the growth effect, where Likelihood ratio is a $X^2$ test on the benchmark model and the saturation model; AIC (Akaike information criterion) represents Akaike information index, and BIC (Bayesian information criterion) represents Bayesian information index; and SRMR (standardized root mean squared residual) is root mean square of standardized residuals. In general, the fitting degree of the model is better, which indicates that the setting of the structural equation is scientific, and the rules described by the empirical data are consistent with expectations.

A P value of the $X^2$ test in the Likelihood ratio presented in Table 6 is close to zero, indicating that the goodness of fit of the structural effect, the environmental effect and the growth effect is significantly better than corresponding benchmark models, and the use of the structural equation to deconstruct these three influence paths conforms to the objective law.

By comparing the goodness of fit between AIC and BIC index models, we find that AIC and BIC indexes of the structural effect have the best goodness of fit, indicating that this influence path is the most significant; the goodness of fit of the environmental effect is slightly weak, indicating that there are differences in the performance of cities in this path; and the growth effect contains the above two effects, with AIC and BIC indexes also showing the strongest residual. The growth effect containing the structural effect and the environmental effect is the weakest in terms of accuracy and information quantity, which proves the significance of distinguishing the structural effect and the environmental effect from the perspective of statistics.

The root mean squares of standardized residuals of the three models shown by the SRMR index are within a reasonable range. Similar to the results of the AIC and BIC indexes, the SRMR index also shows the phenomenon that the residual of the structural effect is the smallest, the residual of the environmental effect is in the middle, and the residual of the growth effect is the largest.

Table 6 Test of Goodness of Fit

| Goodness of fit index | Fitting statistics | Fitting statistic value | | |
| --- | --- | --- | --- | --- |
| | | Structural effect | Environmenta l effect | Growth effect |
| Likelihood ratio | chi2 bs | 259.800 | 1256.721 | 1652.566 |
| | p > chi2 | 0.000 | 0.000 | 0.000 |
| Information criteria | AIC | 15723.475 | 36148.405 | 39849.23 4 |
| | BIC | 15751.991 | 36173.357 | 39881.31 5 |
| Size of residuals | SRMR | 0.131 | 0.168 | 0.197 |

According to the present disclosure, influence paths and multiple effects of natural resources on economic factors are systematically analyzed and deconstructed and complex influence paths of natural resources on economic growth are analyzed from the perspectives of direct influences, indirect influences and overall influences by using the multi-dimensional analysis paradigm of a structural equation, which is of great significance to transforming the economic structure, guaranteeing energy safety and constructing a resource-conserving society.

In the descriptions of this specification, descriptions of reference terms such as "an embodiment", "an example", and "a specific example" mean that specific features, structures, materials, or characteristics that are described with reference to the embodiment or the example are included in at least one embodiment or example of the present disclosure. In this specification, schematic descriptions of the foregoing terms do not necessarily point at a same embodiment or example. In addition, the described specific features, structures, materials, or characteristics may be combined in a proper manner in any one or more of the embodiments or examples.

The foregoing displays and describes basic principles, main features of the present disclosure and advantages of the present disclosure. A person skilled in the art may understand that the present disclosure is not limited to the foregoing embodiments. Descriptions in the embodiments and this specification only illustrate the principles of the present disclosure. Various modifications and improvements are made in the present disclosure without departing from the spirit and the scope of the present disclosure, and these modifications and improvements shall fall within the protection scope of the present disclosure.

**Claims**

1. A method for studying resource endowments and economic growth, wherein urban resource and economic data are collected, and a structural benchmark model $Y_i$ is constructed from independent variables and dependent variables in the collected data;

   a positive correlation relationship between standard deviation units of urban modern resource practitioners and standard deviation units of urban historical resource reserves is obtained through the structural benchmark model $Y_i$, and obtained results are analyzed and sorted to obtain a structural effect sorting result;
   an increase relationship between standard deviation units of urban resource contaminants and the standard deviation units of the urban modern resource practitioners is obtained through the structural benchmark model $Y_i$, and obtained results are analyzed and sorted to obtain an environmental effect sorting result;
   structural effects and environmental effects are integrated, all influence paths of the resource endowments on economic growth are embodied, and obtained results are analyzed and sorted to obtain an overall growth effect result; and
   a relationship between the resource endowments and the economic growth is obtained by performing comparative analysis on the structural effect sorting result, the environmental effect sorting result and an integrated growth effect result.

2. The method for studying resource endowments and economic growth according to claim 1, wherein the structural benchmark model $Y_i$ is constructed from the independent variables and the dependent variables in the collected data by adopting a least square method, $Y_i = \alpha + \beta N_i + \varepsilon_i$, in the formula, $Y_i$ denotes economic development level, and $N_i$ denotes natural resource abundance.

3. The method for studying resource endowments and economic growth according to claim 1, wherein the natural resource abundance $N_i$ is selected from resource reserve data ascertained in *Summary of China Mining Industry (Fourth)*.

4. The method for studying resource endowments and economic growth according to claim 1, wherein comparative analysis is performed on the structural effect sorting result, the environmental effect sorting result and the integrated growth effect result through a structural equation measuring model.

FIG. 1

FIG. 2

## INTERNATIONAL SEARCH REPORT

| | |
|---|---|
| | International application No. |
| | **PCT/CN2021/090731** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI: 资源, 能源, 禀赋, 经济, 增长, 环境, 模型, resource, endowment, economic, growth, environment, model

**C. DOCUMENTS CONSIDERED TO BE RELEVANT**

| Category* | Citation of document, with indication, where appropriate, of the relevant passages | Relevant to claim No. |
|---|---|---|
| A | 岳利萍 等 (YUE, Liping et al.). "中国资源富集地区资源禀赋影响经济增长的机制研究 (Research on the Mechanism about Impact of Natural Resource Endowment on Economic Growth in Resource Rich Regions of China)" 中国人口·资源与环境 (China Population), Vol. 21, No. 10, 31 October 2011 (2011-10-31), pp. 153-159 | 1-4 |
| A | CN 110782133 A (NORTH CHINA UNIVERSITY OF WATER RESOURCES AND ELECTRIC POWER et al.) 11 February 2020 (2020-02-11) entire document | 1-4 |
| A | CN 111861226 A (ZHENGZHOU UNIVERSITY et al.) 30 October 2020 (2020-10-30) entire document | 1-4 |
| A | WO 2013025653 A2 (MCALISTER TECHNOLOGIES, LLC) 21 February 2013 (2013-02-21) entire document | 1-4 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **24 November 2021** | **16 December 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/090731**

| Patent document cited in search report | | | Publication date (day/month/year) | Patent family member(s) | | | Publication date (day/month/year) |
|---|---|---|---|---|---|---|---|
| CN | 110782133 | A | 11 February 2020 | None | | | |
| CN | 111861226 | A | 30 October 2020 | None | | | |
| WO | 2013025653 | A2 | 21 February 2013 | US | 2014095263 | A1 | 03 April 2014 |

Form PCT/ISA/210 (patent family annex) (January 2015)